Europäisches Patentamt

European Patent Office

Office européen des brevets

(11) Publication number: 0 447 564 A1

# EUROPEAN PATENT APPLICATION
## published in accordance with Art. 158(3) EPC

(21) Application number: 90914783.7

(22) Date of filing: 09.10.90

(86) International application number:
PCT/JP90/01306

(87) International publication number:
WO 91/06089 (02.05.91 91/10)

(51) Int. Cl.5: G09G 3/18, G09G 3/36

(30) Priority: 11.10.89 JP 264447/89

(43) Date of publication of application:
25.09.91 Bulletin 91/39

(84) Designated Contracting States:
DE FR GB IT

(71) Applicant: NAKAJIMA ALL PRECISION
KABUSHIKI KAISHA
1480, Oaza Kamigomyo Sakaki-machi
Hanishina-gun
Nagano 389-06(JP)

Applicant: MICROLAB GMBH
Konstanzenstrasse 80
W-8500 Nürnberg 70(DE)

(72) Inventor: HAMAMOTO, Masaki Nakajima All
Precision K.K.

1480, Oaza Kamigomyo Sakaki-machi
Hanishina-gun Nagano 389-06(JP)
Inventor: NARUSAWA, Toru Nakajima All
Precision K.K.
1480, Oaza Kamigomyo Sakaki-machi
Hanishina-gun Nagano 389-06(JP)
Inventor: KOEHL, Johann
Microlab GmbH Konstanzenstrasse 80
W-8500 Nürnberg 70(DE)
Inventor: KLEIN, Friedrich
Microlab GmbH Konstanzenstrasse 80
W-8500 Nürnberg 70(DE)
Inventor: KAEGELER, Peter
Microlab GmbH Konstanzenstrasse 80
W-8500 Nürnberg 70(DE)

(74) Representative: Gura, Henry Alan et al
MEWBURN ELLIS 2 Cursitor Street
London EC4A 1BQ(GB)

(54) LCD DISPLAY DEVICE.

(57) Since a conventional LCD display device includes an LCD controller comprising an LSI, a ROM and a RAM for exclusive use for the LCD controller are necessary. Therefore, the cost of the LCD display device is high and a time spent for process the display data is longer due to the addition of the LCD controller. According to the present invention, all the display data can be stored in a ROM and a RAM for exclusive use for a CPU, and a timing circuit and a latch circuit in place of an LCD controller are provided. Accordingly, no LCD controller is necessary, and the processing time of the display data can be reduced. The LCD display device of this invention can be used for a display of a word processor, or the like.

FIG.1

## FIELD OF TECHNOLOGY

The present invention relates to an LCD (Liquid Crystal Display) device.

## BACKGROUND ART

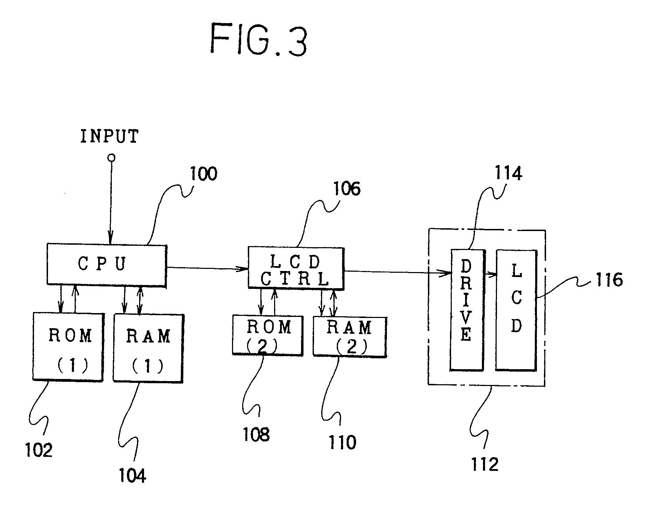

A block diagram of a conventional LCD device is shown in Fig. 3.

A CPU 100 composing of a micro processor is connected to a first ROM 102 storing control programs and character codes and to a first RAM 104 being capable of storing inputted characters, which include letters, figures, marks and diagrams, as work data.

An LCD controller 106 is connected to a second ROM 108 storing character-generating data and to a second RAM 110 being capable of storing character-generating data, which are read from the second ROM 108 by the LCD controller 106 and which correspond to work data sent from the CPU 100 in a prescribed code, e.g. ASCII.

An LCD unit 112 has an LCD 116 board on which characters are shown. Character generating data stored in the second RAM 110 are sent to the LCD board 116 via a driver-circuit 114 to show characters thereon.

## DISCLOSURE OF THE INVENTION

Above described conventional LCD device, however, has following disadvantages.

Namely, the LCD controller composes of LSI and has compatibility for use in various types of LCD units. Therefor, the LCD controller has a complex structure and it is, as similar to CPU, expensive in price. Manufacturing cost of the conventional LCD device should be expensive. And despite required memory capacity of the second ROM and the second RAM for the LCD controller is relatively small, ROMs and RAMs sold at this time have large memory capacity for one chip, so that, in case of the second ROM and the second RAM, the part of memory capacity to be used is quite small and it is uneconomical to provide the second ROM and the second RAM to the LCD controller. Moreover, signals must pass through two LSI: the CPU and the LCD controller, so the time from inputting character to be displayed to displaying the character on the LCD unit will be greater.

The object of the present invention is to provide an LCD device, which is inexpensive and which is able to display characters quickly.

To solve the above described disadvantages, the LCD device has following elements. A ROM storing control programs for controlling the LCD device and character-generating data for displaying characters. A RAM for storing characters to be displayed and character-generating data corresponding to the characters stored. Latching means for temporarily holding character-generating data outputted from the RAM. An LCD unit displaying characters when the character-generating data held by the latching means are inputted. Timing determining means for determining timing of holding character-generating data by the latching means. And control means or CPU for reading character-generating data of characters to be displayed on the LCD unit from the ROM, storing the character-generating data in the RAM, outputting the character-generating data from the RAM at the timing determined by the timing determining means, holding the character-generating data outputted from the RAM in the latching means, and inputting the character-generating data, which are outputted from the latching means, to the LCD unit so as to display thereon.

Especially, the timing determining means may prohibit the control means to access to the RAM at the time that the latching means holds character-generating data.

In the present invention, character-generating data are stored in the ROM connected to the control means and character-generating data of character to be display are to be stored in the RAM connected there to, thus the LCD controller, the second ROM and the second RAM can be omitted. The number of elements through which signals must pass unit can be reduced, so that required time to display characters on the LCD unit can be shortened.

And in the present invention, manufacturing cost of LCD device can be quite reduced and inexpensive LCD device can be provided because expensive LCD controller, one ROM and one RAM can be omitted. Further, characters can be displayed in quite short time, because ofshort data processing time.

## BRIEF DESCRIPTION OF THE DRAWINGS

The present invention will become more fully understood from the detailed description given herein below and the accompanying drawings which are given by way of illustration only, and thus are not limitative of the present invention and wherein:

Fig. 1 shows a block diagram of an embodiment of the LCD device of the present invention;

Fig. 2 shows a block diagram of another embodiment thereof; and

Fig. 3 shows a block diagram of conventional LCD device.

## EMBODIMENTS

Preferred embodiments of the present invention will now be described in detail with reference to the accompanying drawings.

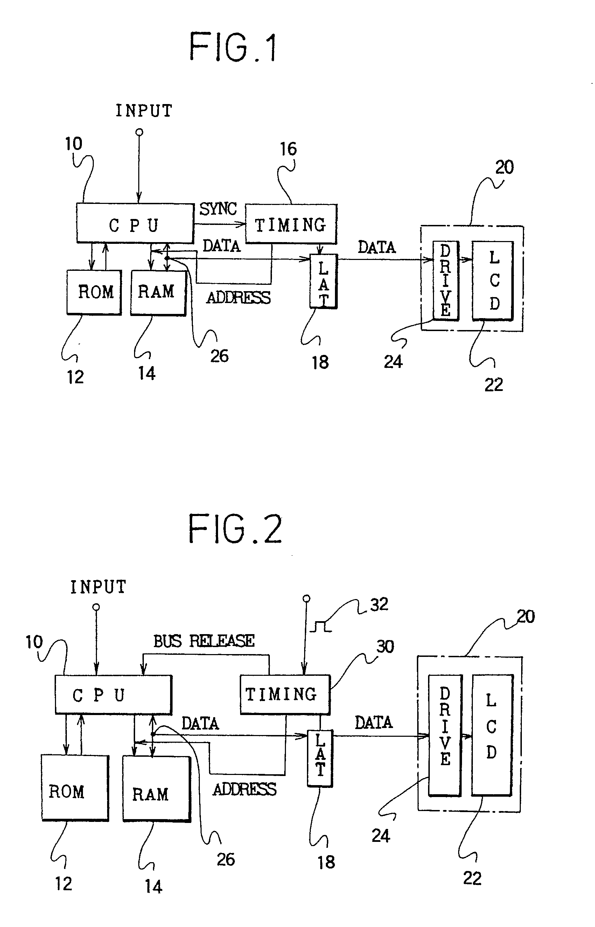

In Fig. 1, a CPU 10 as control means composes of a micro-processor. The CPU 10 is connected to a ROM 12 and a RAM 14. Control programs of the CPU 10 and character-generating data, which indicate data of pixels forming character on an LCD board, are stored in the ROM 12 beforehand. The memory capacity of the ROM 12 is, for example, 128 kilobytes, and a part of the memory capacity, e.g. 2 kilobytes, may be assigned to store character-generating data. Meanwhile, data (characters) such as work data inputted to the CPU 10 and character-generating data corresponding to the characters inputted there to will be stored in the RAM 14. The character-generating data stored in the RAM 14 are data for displaying characters on the LCD board. The memory capacity of the RAM 14 is, for example, 32 kilobytes, and a part of the memory capacity, e.g. 4 kilobytes, may be assigned to store character-generating data for displaying characters.

A timing circuit 16 as timing determining means sends address data, which indicate locations (coordinates) of pixels on the LCD board, to the RAM 14 during the idle time of the CPU 10 or while the CPU 10 does not read and write. The timing circuit 16 sends the address data upon receiving synchronous signal indicating the idle time of the CPU 10 therefrom. Sending the address data to the RAM 14, the timing circuit 16 sends signal for holding character-generating data, which correspond to the address data and which are sent from the RAM 14, to a latching circuit 18. Note that, the timing circuit 16 may have a counter and may output the address data as output value of the counter.

The latching circuit 18 as latching means temporarily holds the character-genarating data, which correspond to the address data from the timing circuit 16, from the RAM 14 at the time of receiving the synchronous signal from the timing circuit 16.

An LCD unit 20 has the LCD board 22 and its driver circuit 24. Character-generating data which are held by the latching circuit 18 are inputted to the driver circuit 24, and character corresponding to the character-generating data inputted there to is displayed on the LCD board 22. Note that, the LCD board 22 is, e.g. a dot matrix LCD board.

In the LCD device of this embodiment, for example, when a character "A" is inputted to the CPU 10 to be displayed, the CPU 10 reads character-generating data, which correspond to pixels for displaying the character "A" on the LCD board 22, from the ROM 12 and writes the character-generating data in the part of memory area of the RAM 14.

Receiving the synchronous signal from the CPU 10. the timing circuit 16 sends the address data indicating coordinates of pixels on the LCD board to the RAM 14 during the idle time of the CPU 10. Simultaneously the timing circuit 16 directs the latching circuit 18 to hold the character-generating data which correspond to the address data and which are sent from the RAM 14. The character-generating data, e.g. 1 byte binary coded data, which correspond to the address data and which are sent from the RAM 14 during the idle time of the CPU 10, are sent to the latching circuit 18 via connecting point 26. Then the driver circuit 24 drives the LCD board 22 based on the character-generating data inputted so as to display a part of the character "A" on the LCD board by pixels. Above described sequence is repeated based on next address data assigned by the timing circuit 16, which are sent during the next idle time of the CPU 10. When the sequence is repeated prescribed times, the character "A" is displayed on the LCD board 22. The sequence is repeated prescribed times but each sequence is executed in quite a short time, so the character "A" can be displayed quickly.

Next, second embodiment of the present invention will be explained with reference to Fig. 2. Elements which are the same as the former embodiment shown in Fig. 1 are assigned same numerals and their explanation will be omitted.

A timing circuit 30 as timing determining means has a counter for counting pulses 32. The pulse 32 can be generated by oscillation means such as an independent pulse oscillator, a frequency divider for dividing the clock pulse of the CPU 10, etc. In the former embodiment, the timing circuit 16 sends address data to the RAM 14 and signal for holding character-generating data to the latching circuit 18 during the idle time of the CPU 10. Sometimes, however, there is a case in which it is impossible to coincide the idle time of the CPU 10 with the signal from the latching circuit 18. Thus, in the present embodiment, the timing circuit 30 sends open signal, which directs the CPU 10 to compulsorily open a data bus line to the RAM 14, to the CPU 10 at the prescribed timing, e.g. the timing of counting up the pulse 32 by the counter, so as to send character-generating data, which correspond to the address data sent from the timing circuit 30 to the RAM 14, and to compulsorily open the data bus line. Namely, in the second embodiment shown in Fig. 2, the open signal from the timing circuit 30 compulsorily creates the idle time of the CPU 10. Other function of the LCD device of this embodiment is the same as the former embodiment of Fig. 1. so explanation will be omitted.

The LCD device of the above described embodiments can be used for, e.g. a display unit of a word processor. In case of the word processor display, letters, figures, marks and further diagrams can be displayed as characters. If the RAM has large capacity, variety of character-generating data, which are prepared for various font forms, for one character, can be stored therein, and characters having different form can be displayed quickly.

Preferred embodiments of the present invention have been described above but the present invention is not limited to the embodiment, and many modifications, of course, will be allowed without deviating from the scope of the invention.

**Claims**

1. An LCD device,
   comprising:
   a CPU;
   a ROM storing control programs for said CPU and character-generating data;
   a RAM for storing character-generating data corresponding to characters, which have been inputted to said CPU, read from said ROM;
   latching means for temporarily holding character-generating data outputted from said RAM;
   timing determining means for determining timing of holding character-generating data by said latching means; and
   an LCD unit displaying characters when the character-generating data held by said latching means are inputted.

2. An LCD device according to claim 1, wherein said timing determining means prohibits said control means to access to said RAM at the time when said latching means hold character-generating data.

# FIG.1

# FIG.2

# FIG.3

INPUT

```
  CPU  ───────────►  LCD
                     CTRL  ──────────►  DRIVE │ LCD

  ROM    RAM         ROM     RAM
  (1)    (1)         (2)     (2)
```

100

106

114

116

102

104

108

110

112

# INTERNATIONAL SEARCH REPORT

International Application No PCT/JP90/01306

**I. CLASSIFICATION OF SUBJECT MATTER** (if several classification symbols apply, indicate all) [6]

According to International Patent Classification (IPC) or to both National Classification and IPC

Int. Cl$^5$  G09G3/18, G09G3/36

**II. FIELDS SEARCHED**

| Minimum Documentation Searched [7] | |
|---|---|
| Classification System | Classification Symbols |
| IPC | G09G3/18, G09G3/36 |

Documentation Searched other than Minimum Documentation
to the Extent that such Documents are Included in the Fields Searched [8]

Jitsuyo Shinan Koho             1973 - 1990
Kokai Jitsuyo Shinan Koho       1972 - 1990

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 61-282886 (Canon Inc.), December 13, 1986 (13. 12. 86), Fig. 1 (Family: none) | 1 |
| A | JP, A, 61-213896 (Ascii Corp.), September 22, 1986 (22. 09. 86), Figs. 1, 3 & EP, A2, 195,203 & US, A, 4,760,387 | 1 |
| Y | JP, A, 61-41189 (Sord K.K.), February 27, 1986 (27. 02. 86), Line 14, upper left column to line 5, lower left column, page 545 | 1, 2 |
| Y | JP, A, 60-73727 (Fujitsu Ltd.), April 25, 1985 (25. 04. 85), Fig. 1 (Family: none) | 1 |
| Y | JP, A, 58-190990 (Fujitsu Ltd.), November 8, 1983 (08. 11. 83), Fig. 2 (Family: none) | 1 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| December 14, 1990 (14. 12. 90) | December 25, 1990 (25. 12. 90) |
| International Searching Authority | Signature of Authorized Officer |
| Japanese Patent Office | |

Form PCT/ISA/210 (second sheet) (January 1985)

| FURTHER INFORMATION CONTINUED FROM THE SECOND SHEET | |
|---|---|
| A    JP, A, 58-59490 (Toshiba Corp.),<br>April 8, 1983 (08. 04. 83),<br>Fig. 1 (Family: none) | 1 |
| Y    JP, A, 63-175892 (Sanyo Electric<br>Co., Ltd.),<br>July 20, 1988 (20. 07. 88),<br>Fig. 1 (Family: none) | 1, 2 |
| Y    JP, A, 62-192796 (Hitachi, Ltd.),<br>August 24, 1987 (24. 08. 87),<br>Lines 12 to 18, upper right column,<br>page 913, Fig. 1 (Family: none) | 1, 2 |

V.☐ **OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers   , because they relate to subject matter not required to be searched by this Authority, namely:

2.☐ Claim numbers   , because they relate to parts of the international application that do not comply with the prescribed requirements to such an extent that no meaningful international search can be carried out, specifically:

3.☐ Claim numbers   , because they are dependent claims and are not drafted in accordance with the second and third sentences of PCT Rule 6.4(a).

VI.☐ **OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)